# EUROPÄISCHE PATENTANMELDUNG

(11) **EP 2 450 232 A2**
(43) Veröffentlichungstag der Anmeldung: **09.05.2012**
(21) Anmeldenummer: 11466034.3
(22) Anmeldetag: 27.10.2011
(51) Int. Cl.: B60N 3/10

(54) **Flaschenhalter**

(30) Priorität: 04.11.2010 CZ 20100801
(71) Anmelder: Skoda Auto a.s., 293 60 Mladá Boleslav (CZ)
(72) Erfinder: Velíková, Katerina, Mladá Boleslav 29301 (CZ); Janák, Vladimír, 18200 Praha 8 (CZ)

(57) **Zusammenfassung**

Der Halter (1) der Flasche (6) im Fahrzeug ist im Fahrgastraum zwischen dem Vordersitz (7) und dem Fußbereich am vorderen Abschnitt des Mitteltunnels (8) des Fahrzeuges angeordnet. Der Halter (1) der Flasche (6) ist auf der Betätigungsstange (2) der Sitzverstellung (7) aufgesetzt. Dabei wird der Halter (1) der Flasche (6) durch einen Vorbau (3) und einen Schenkel (4) gebildet. Der Vorbau (3) ist für das genaue Einsetzen auf die elastische Betätigungsstange (2) der Sitzverstellung (7) des Fahrzeuges ausgestaltet. Der Schenkel (4) ist mit dem Vorbau (3) fest verbunden und weist mindestens einen bogenförmig gekrümmten elastischen Ausläufer (5,5') auf. Die Krümmung des elastischen Ausläufers (5,5') ist zum Mitteltunnel (8) des Fahrzeuges ausgerichtet.

## Beschreibung

### Technisches Gebiet

Die Erfindung betrifft einen Flaschenhalter, der im Fahrgastraum zwischen dem Sitz und dem vorderen Abschnitt des Mitteltunnels im Fußbereich des Nutzers angeordnet und an der Betätigungsstange der Sitzverstellung aufgesetzt ist, wobei der Flaschenhalter zum Abstellen von Trinkflaschen oder beliebigen Gefäße für den Bedarf der Fahrzeuginsassen dient.

### Bisheriger Stand der Technik

Für die Befestigung verschiedener Flaschen und flaschenförmiger Gefäße im Fahrer- und Beifahrerbereich werden geläufig verschiedene Halterungen und komplizierte Befestigungssysteme verwendet. Diese Halterungen sind in überwiegender Mehrheit an der Schalttafel oder am Mitteltunnel zwischen dem Fahrer und dem Beifahrer angeordnet.

Im Dokument DE20213079U1 ist ein Flaschenhalter beschrieben, der am Fahrer- oder Beifahrersitz angeordnet und an beliebiger Stelle der unteren Sitzverkleidung befestigt werden kann. Es handelt sich um einen geschlossenen oder offenen rohrförmigen Halter mit einem Basisteil und mit verschiedenen zusätzlichen in den Halter einsetzbaren Einbauelementen, der im Auto an der Sitzverkleidung neben dem Mitteltunnel oder an vielen anderen Stellen befestigt werden kann und zum Abstellen unterschiedlicher Flaschen und flaschenähnlichen Behälter dient. Der Halter ist rohrförmig mit einer Länge von ca. 100mm und kann mit oder ohne Boden ausgestaltet sein. Dieser Halter wird am Fahrer- oder Beifahrersitz verschraubt oder durch sonstige Verbindungen befestigt. Somit wird der Halter immer bei der Sitzverstellung mit dem Sitz verschoben und behält damit immer die gleiche Position am Sitz. Der Halter ist in der Ecke zur Mitte des Fahrzeuges seitlich unter / neben den Knien des Nutzers angeordnet, wo er nicht störend ist und die Flasche sicher verklemmen kann. Der ringförmige Halter kann auch als Abfallbehälter genutzt werden, wenn in den Ring ein Plastik- oder Papiertüte eingehängt wird.. Dokument DE10223404A1 beschreibt eine Haltevorrichtung für die Befestigung eines Trinkgefäßes im Fahrgastraum zwischen dem Fahrer- und Beifahrersitz, das beliebig an der Mittelkonsole im Abschnitt zwischen der Schalttafel und den Fondsitzen befestigt werden kann. Zur Mittelkonsole ist in diesem Abschnitt ein Verbindungsteil befestigt, auf dem senkrecht zur Vertikale der Flaschenhalter frei aufgesetzt ist. Dieser Verbindungsteil kann auch zur Vorderseite des Fahrer- sowie Beifahrersitzrahmens im Fußbereich befestigt werden. Der Verbindungsteil umfasst eine ringförmige Aufnahme. Der Flaschenhalter umfasst einen Haltearm, auf dem ein ausfahrbarer Bolzen befestigt ist. Die eigentliche Verbindung des Flaschenhalters mit dem Verbindungsteil ist derart ausgeführt, dass der ausfahrbare Bolzen des Flaschenhalters in die ringförmige Aufnahme des Verbindungsteils eingesteckt wird.

Im DE9408692U1 ist ein aus einem offenen Federring bestehender Flaschenhalter beschrieben, der einen Eintrittsspalt für die Aufnahme eines Getränkebehälters umfasst. An einer dem Eintrittsspalt gegenüberliegenden Stelle ist der Gefäßhalter mit einem Halteteil verbunden. Dieser Halteteil ist als Klipskörper mit zwei federnd aufspreizbaren Schenkeln ausgebildet, der an dem Grifftail der Betätigungsstange einer Sitzverstellung befestigt ist. Der Halteteil kann anstelle durch Federkraft auch magnetisch an dem Griffteil der Betätigungsstange verankert sein. Der Nachteil derartiger Lösungen liegt darin, dass durch die Schwingungen während der Fahrt sich die federnden Schenkel des Halteteils oder des magnetischen Halteteils am Umlauf des Griffteils der Betätigungsstange der Sitzverstellung bewegen können und dadurch kann sich auch der im Gefäßhalter abgestellte Getränkebehälter bewegen.

### Darstellung der Erfindung

Die Aufgabe wird mit einem im Fahrgastraum zwischen dem Vordersitz und dem vorderen Abschnitt des Mitteltunnels im Fußbereich der Fahrgäste angeordneten Flaschenhalter gelöst. Der Halter ist auf der Betätigungsstange der Sitzverstellung aufgesetzt. Die Darstellung der Erfindung liegt darin, dass der Flaschenhalter durch einen Schenkel und einen Vorbau gebildet wird, die aneinander verbunden sind. Der Vorbau ist derart ausgebildet, damit sein Aufsetzen auf die Betätigungsstange der Sitzverstellung genau ohne ein Spiel erfolgt. Der Schenkel weist mindestens einen bogenförmig gekrümmten elastischen Ausläufer auf. Die Krümmung der elastischen Ausläufer ist zum Mitteltunnel des Fahrzeuges gerichtet, damit die notwendige Umschließung und der notwendige Andruck der Flasche zum Mitteltunnel gesichert ist. Die Betätigungsstange hat die notwendige Elastizität und Vorspannung und sichert die entsprechende Kraftwirkung auf die Flasche in Richtung der imaginären X-Achse zum Mitteltunnel hin und verhindert so die Bewegung der Flasche in dieser X-Achse. Die Krümmung der Ausläufer des Halters verhindert die Bewegung der Flasche in der imaginären Z-Achse. Dadurch wird die unerwünschte Bewegung der Flasche vermieden, die durch die Schwingungen während der Fahrt entstehen kann. Der Schenkel ist elastisch und weist an der Befestigungsstelle des Halters bestimmte zulässige Abweichung in der X-Achse auf, um Flaschen unterschiedlicher Durchmesser in den Halter abstellen zu können. Der Halter ist aus einem elastischen Kunststoff ausgebildet und die Flasche entspricht einer handelsüblichen PET-Flasche für Getränke.

### Übersicht der Figuren der Zeichnungen

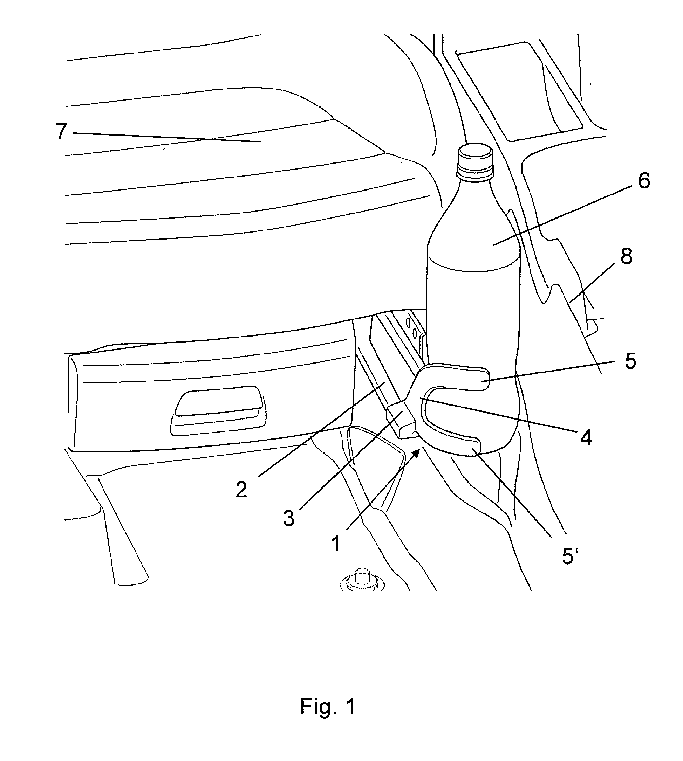

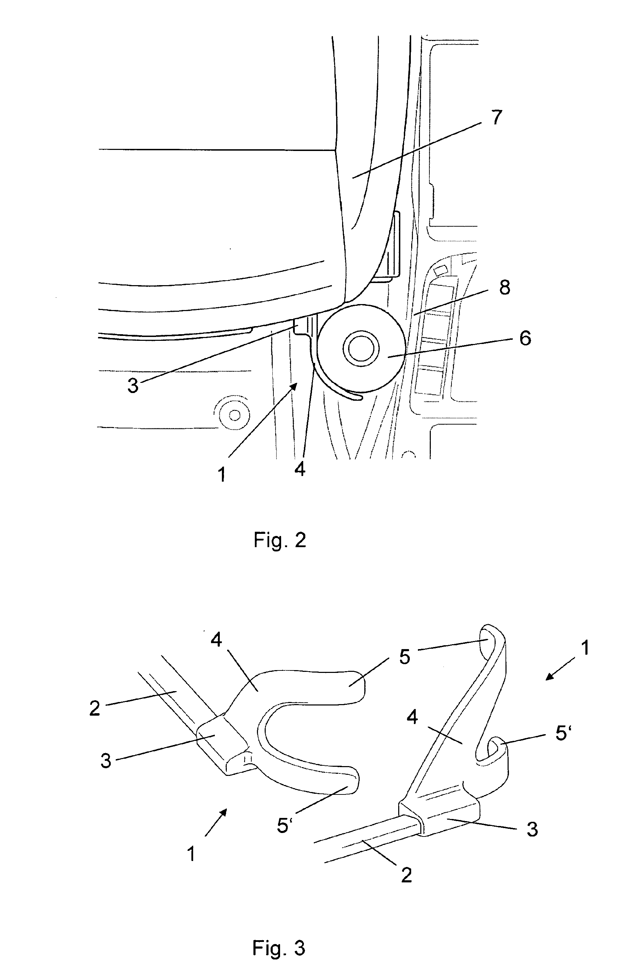

In der Fig. 1 ist die erfindungsgemäße Anordnung des Halters und der Flasche in einer perspektivischen Gesamtansicht des Raumes zwischen dem Vordersitz und dem Mitteltunnel des Fahrzeuges, in Fig. 2 die gleiche Anordnung des Halters und der Flasche in einer Draufsicht, in Fig. 3 in zwei unterschiedlichen perspektivischen Ansichten der eigentliche Halter in der zum Griff befestigten Stellung dargestellt.

### Ausführungsbeispiel der Erfindung

In Fig. 1 und 2 ist der Raum zwischen dem Vordersitz 7 des Beifahrers und dem Mitteltunnel 8 des Fahrzeuges dargestellt. Die Betätigungsstange 2 der manuellen Sitzverstellung 7 ist hier entweder ohne einen zur Stange 2 befestigten Griffteil ausgebildet, auf dem der Halter 1 aufgesetzt ist, oder weist die Betätigungsstange 2 einen Betätigungsgriff der Sitzverstellung 7 auf, der von der Stange 2 abgebaut werden kann und statt dessen wird an der Betätigungsstange 2 der manuellen Sitzverstellung 7 der Halter 1 aufgesetzt. Der Halter 1 der Flasche 6 wird durch einen Vorbau 3 und einen Schenkel 4 gebildet. Der Vorbau 3 des Halters 1 ist derart ausgestaltet, damit sein Aufsetzen auf die Betätigungsstange 2 der Sitzverstellung 7 genau und ohne ein Spiel erfolgt, um eventuelles Ausrücken aus der Betätigungsstange 2 aufgrund der Schwingungen bei der Fahrt zu vermeiden.

Der Schenkel 4 des Halters 1, nach Fig. 3, weist zwei bogenförmig gekrümmte elastische Ausläufer 5, 5' auf. Die Krümmung der elastischen Ausläufer 5, 5' ist zum Mitteltunnel 8 des Fahrzeuges gerichtet, wie der Fig. 1 und 2 zu entnehmen ist. Die Krümmung der Ausläufer 5, 5' ist deswegen ausgebildet, damit die notwendige Umschließung und der notwendige Andruck der Flasche 6 im Halter 1 hin zum Mitteltunnel 8 gesichert ist. Die Betätigungsstange 2 der Sitzverstellung 7 hat die notwendige Elastizität und Vorspannung und wirkt mit notwendiger Kraft auf die Flasche 6 im Halter 1 in Richtung der imaginären X-Achse, d.h. der zur Fahrtrichtung senkrechten Achse, hin zum Mitteltunnel 8 verhindert so die Bewegung der Flasche 6 in dieser X-Achse. Die Krümmung der Ausläufer 5, 5' verhindert die Bewegung der Flasche 6 in Richtung der imaginären Z-Achse, d.h. der mit der Fahrtrichtung parallelen Achse. Dadurch wird die unerwünschte Bewegung der Flasche 6 im Halter 1 vermieden, die durch die Schwingungen während der Fahrt entstehen kann.

Die Betätigungsstange 2 ist elastisch und weist an der Befestigungsstelle des Halters 1 bestimmte zulässige Abweichung in der X-Achse auf, um Flaschen unterschiedlicher Durchmesser in den Halter 1 abstellen zu können, die den üblichen PET-Flaschen entsprechen. Die Aufnahme der Betätigungsstange 2 der Sitzverstellung 7 im Vorbau 3 des Halters 1 ist hier nicht dargestellt und man kann hier ein einfaches Einstecken der Betätigungsstange 2 in den Vorbau 3 des Halters 1 oder jedwede geeignete Sperrung (z.B. Raste u.ä.) einsetzen.

Die Flasche 6 wird in den Halter 1 einfach so abgestellt, dass der auf der Betätigungsstange 2 der Sitzverstellung 7 aufgesetzte Halter 1 in der Richtung vom Mitteltunnel 8 zum Beifahrersitz 7 gedrückt wird und dadurch schwenkt die Betätigungsstange 2 aus. Dann wird die Flasche 6 in den Halter 1 abgestellt und der Halter 1 entlastet. Durch eigene elastische Vorspannung der Betätigungsstange 2 wird die Flasche 1 an den Mitteltunnel 8 angedrückt.

Der Halter kann aus elastischem Kunststoff ausgebildet sein und die Flasche entspricht einer handelsüblichen PET-Flasche für Getränke, wie diese standardmäßig für verschiedene Getränke wie Limonaden, Mineralwasser usw. in verschiedenen Volumengrößen (0,5l; 1l; 1,5l; 2l usw.) verwendet wird.

### Gewerbliche Anwendbarkeit

Der erfindungsgemäße Flaschenhalter kann in allen Automobilen eingesetzt und vorteilhaft beispielsweise im Fahrgastraum zwischen dem Vordersitz und dem vorderen Abschnitt des Mitteltunnels im Fußbereich der Fahrgäste angeordnet werden.

### Verwendete Bezeichnungen

- 1: Flaschenhalter
- 2: Betätigungsstange der Sitzverstellung
- 3: Vorbau des Halters
- 4: Schenkel des Halters
- 5, 5': Ausläufer des Schenkels
- 6: Flasche
- 7: Fahrzeugsitz
- 8: Mitteltunnel des Fahrzeuges

## Patentansprüche

1. Ein Halter (1) der Flasche (6), der im Fahrgastraum zwischen dem Sitz (7) und dem Fußbereich am vorderen Abschnitt des Mitteltunnels (8) des Fahrzeuges angeordnet und auf der Betätigungsstange (2) der Sitzverstellung (7) aufgesetzt ist, **dadurch gekennzeichnet, dass**
- der Halter (1) der Flasche (6) umfasst
einen Vorbau (3), der für das genaue Einsetzen auf die Betätigungsstange (2) der Sitzverstellung (7) des Fahrzeuges ausgestaltet ist,
einen Schenkel (4), der mit dem Vorbau (3) fest verbunden ist und mindestens einen bogenförmig gekrümmten elastischen Ausläufer (5, 5') umfasst, wobei die Krümmung des elastischen Ausläufers (5, 5') zum Mitteltunnel (8) des Fahrzeuges ausgerichtet ist, damit die notwendige Umschließung und der notwendige Andruck der am Mitteltunnel angelehnten (8) Flasche (6) gesichert ist.

2. Ein Halter (1) der Flasche (6) nach Anspruch 1 **dadurch gekennzeichnet, dass** der Halter (1) aus elastischem Kunststoff ausgebildet ist.

3. Ein Halter (1) nach Ansprüchen 1 und 2 **dadurch gekennzeichnet, dass** die Flasche (6) eine handelsübliche PET-Flasche ist.
